# EUROPEAN PATENT SPECIFICATION

(11) **EP 1 657 862 B1**
(45) Date of publication and mention of the grant of the patent: **15.08.2007**
(21) Application number: 05027964.5
(22) Date of filing: 16.11.2002
(51) Int. Cl.: H04L 12/56

(54) **Centralized dynamical resource reservation method based on the exchange of service specific capacity settings in a multi-RAT network**
Zentralisiertes dynamisches Ressourcenreservierungsverfahren gestützt auf den Austausch dienstspezifischer Kapazitätseinstellungen in einem Multi-RAT-Netzwerk
Procédé de réservation de ressources centralisé dynamique basé sur l'échange de paramètres de capacité spécifiques au type de service dans un réseau multi-RAT

(43) Date of publication of application: 17.05.2006
(62) Divisional of application: 02425674.5
(73) Proprietor: Siemens S.p.A., 20126 Milano (IT)
(72) Inventor: Meago, Francesco, 23100 Sondrio (IT)

(56) References cited:
- WO-A-02/32179
- WO-A-02/51176
- "3GPP TR 25.891 V0.1.1: 3rd Generation Partnership Project; Technical Specification Group Radio Access Network; Improvement of RRM across RNS and RNS/BSS (Post Rel-5); (Release 6)" October 2002 (2002-10), 3GPP TR 25.891 V0.1.10, PAGE(S) 1-21 , XP002227867 * chapter 4.1 * * chapter 7.1 *

## Description

### FIELD OF THE INVENTION

The present invention relates to the field of Public Land Mobile Networks (PLMN) and more precisely to a centralised dynamical resource reservation method based on the exchange of service specific capacity setting in a multi-RAT network.

### BACKGROUND ART

With the next introduction of 3^{rd} Generation UMTS (Universal Mobile Telecommunication System) systems the multi-RAT (Radio Access Technology) opportunities will be putted in foreground. The former 2^{nd} Generation PLMN (Public Land Mobile Network) includes: GSM 900 MHz, DCS 1800 MHz (Digital Cellular System), GSM EDGE (Enhanced Data rates for GSM Evolution), GPRS (General Packet Radio Service); PCS (Personal Communication System), etc. In the new 3^{rd} Generation UMTS two CDMA radio access techniques have been defined, respectively known as: TDD (Time Division Duplex) UTRA (UMTS Terrestrial Radio Access), in which transmission directions are distinguished in the time domain, and FDD (Frequency Division Duplex) UTRA, in which transmission directions are distinguished in the frequency domain. The FDD UTRA is used by the WCDMA (Wide band Code Division Multiple Access) system. The TDD UTRA technique foresees in its turn two options: a HCR (High Chip Rate) TDD of 3.84 Mcps, and a LCR (Low Chip Rate) TDD of 1.28 Mcps. The Applicant and CWTS (Chinese Wireless Telecommunication Standards) committee are furthermore engaged in the development of a TD-SCDMA (Time Division - Synchronous Code Division Multiple Access), standard which is based on the 3GPP 1.28 Mcps TDD physical layer and reuses much of the GSM-GPRS higher layer functions and procedures, offering the operators a technology able to run on most of the deployed GSM network elements.

Both 2^{nd} and 3^{rd} Generation PLMNs are standardized by international authorities whose aim is that of making the operation of the systems of the various manufacturers each other compatible. In particular: GSM is described in the relevant Technical Reports (TR) issued by the Special Mobile Group (SMG) of the European Telecommunications Standards Institute (ETSI), while UMTS is described in the Technical Specifications (TS) issued by the 3rd Generation Partnership Project (3GPP) in the ambit of the ITU-T (International Telecommunication Union). At the time of writing, the SMG does not exist anymore and the related GSM work has been taken over by 3GPP that incorporate standardisation of both GSM and UMTS systems.

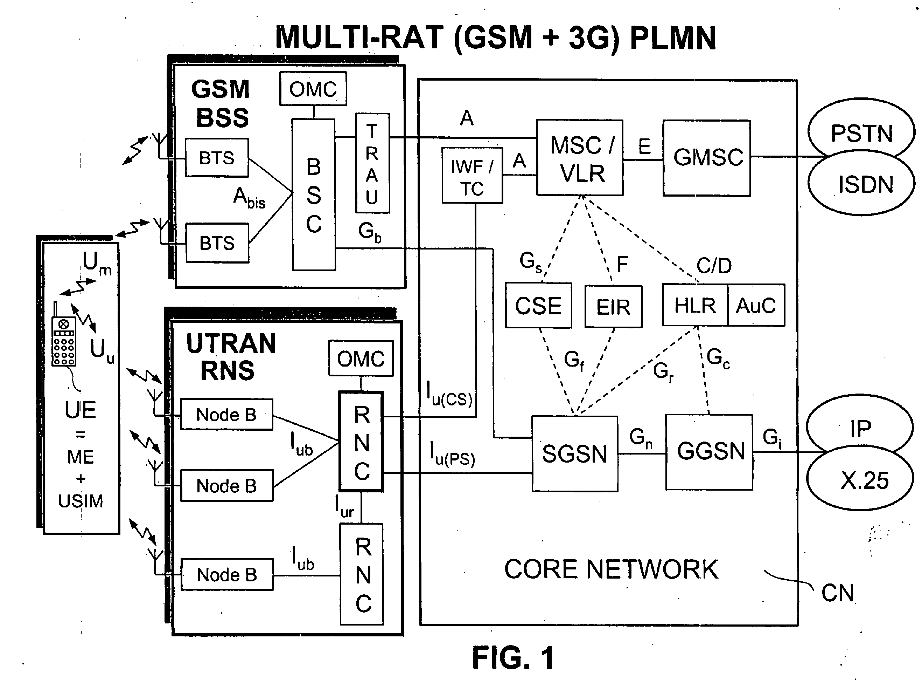

**Fig.1** shows a multi-RAT (Radio Access Technology) PLMN that will be soon completed in Europe. The new Universal Mobile Telecommunications System (UMTS) shares the existing GSM (Global System for Mobile communications) Core Network CN with the GPRS service. The Core Network CN is connected to one or more BSS (Base Station Subsystem) of the GSM, and to one or more RNS (Radio Network Subsystem) of an UTRAN (Universal Terrestrial Radio Access Network). The UMTS system of fig.1 is described in the TS 23.002 (CN) and TS 25.401 (UTRAN). Both the UTRAN and BSS are connected, on air, to a plurality of User Equipment UE, each including a Mobile Equipment ME with a respective USIM card (UMTS Subscriber Identity Module). Without limitation, an UE can be either of the single or multistandard type. The UTRAN includes a plurality of Node B blocks each connected to a respective Radio Network Controller RNC by means of an Iub interfaces. A node B includes a Base Transceiver Station BTS connected to the UEs through an on-air Uu interface. The upper RNC is a Serving S-RNC connected to the Core Network CN by means of a first Iu(CS) interface for Circuits Switched and a second Iu(PS) interface for Packet Switched of the GPRS. It is also connected to an Operation and Maintenance Centre (OMC) . The RNC placed below can be a Drift D-RNC and is connected to the upper S-RNC by means of an Iur interface. The UTRAN with the served UEs constitute a Radio Network Subsystem (RNS) disclosed in TS 23.110.

The GSM - BSS block includes a plurality of BTSs connected to a Base Station Controller BSC by means of an Abis Interface and to the UEs through an on-air Um interface. The BSC is interfaced to the Core Network CN by means of a Gb interface (packet switched) and is further connected to a Transcoder and Rate Adaptor Unit TRAU also connected to the Core Network CN through an A interface. It is also connected to an Operation and Maintenance Centre (OMC).

The CN network includes the following Network Elements: Switching Centre MSC / Visitor Location Register VLR, Gateway MSC GMSC, Interworking Function IWF / Transcoder TC, Camel Service Environment CSE, Equipment Identity Register EIR, Home Location Register HLR, Authentication Centre AuC, Serving GPRS Support Node SGSN, and Gateway GPRS Support Node GGSN. The following interfaces are visible inside the CN block: A, E, Gs, F, C, D, Gf, Gr, Gc, Gn and Gi. The IWF block translates the Iu(CS) interface into the A interface towards MSC / VLR block. The TC element performs the transcoding function for speech compression/expansion concerning UTRAN (differently from GSM where this function is performed outside the CN network) also connected to the MSC block through the A interface. The GMSC is connected to the MSC / VLR through the E interface and to a Public Switched Telephone Network PSTN and an Integrated Services Digital Network ISDN. Blocks CSE, EIR, HLR and AUC are connected to the MSC / VLR through, in order, the Gs, F, C, and D interfaces, and to the SGSN node through the Gf and Gr interfaces. The SGSN block is interfaced at one side to the S-RNC inside UTRAN block by means of the Iu(PS) interface, and to the BSC inside the GSM-BSS block through the Gb interface. At the other side the SGSN node is interfaced to the GGSN node through the Gn interface. The last block is connected through the Gi interface to a packet data switching network of the IP (Internet Protocol) type and/or the X.25 type. The Core Network CN of fig.1 consists of an enhanced GSM Phase 2+, as described in TS 23.101, with a Circuit Switched CS part and a packet Switched part (GPRS). Another important Phase 2+ is the CAMEL (Customised Application for Mobile network Enhanced Logic) Application Part (CAP) used between the MSC and CSE for Intelligent Network (IN) applications. CAP is described in TS 29.078.

In operation, the MSC, so as the SGSN node, keep records of the individual locations of the mobiles and performs the safety and access control functions. More BSS and RNS blocks are connected to the CN Network, which is able to perform intrasystem handovers between adjacent RNSs or between adjacent BSSs, and intersystem handovers between a RNS and an adjacent BSS. UTRAN in respect of GSM further improves data service by making possible greater throughputs and the asymmetrical traffic typical of the Internet Protocol (IP). The network of **fig.1,** which only represents a minimal part of a world-wide network, shall allow the routing of a telephone call inside an International UMTS / GSM Service Area subdivided into National Service Areas. By way of the hierarchical structure of the UMTS network, each National Service Area is subdivided into the following nested domains of decreasing area: PLMN Service Area; MSC / SGSN Service Area; Location Area LA (CS-domain) uniquely defined by its LAI (Location Area Identity) code; Routing Area RA inside the SGSN Service Area as a subset of the CS Location Area; Cell Area where the UE is actually located in the radio coverage of a target Node B or BTS.

Many protocols are deputed to govern the exchange of information at the various interfaces of the multi-RAT network of fig.1. These protocols are largely based on the Open System Interconnection (OSI) Reference Model for CCITT (Comité Consultatif International Télégraphique et Téléphonique) Applications (Rec. X.200). The OSI model is partitioned into seven layers. From the point of view of a particular layer, the adjacent lower layer provides a "transfer service" with specific features. The way in which the lower layer is realised is immaterial to the next higher layer. Correspondingly, the lower layer is not concerned with the meaning of the information coming from the higher layer or the reason for its transfer. Historically the problem of designing a well reliable signalling system has been posed in the PSTNs domain. For this aim a CCITT Signalling System N° 7 has been developed to provide an internationally standardised general purpose Common Channel Signalling (CCS) system. CCS is a signalling method in which a single channel conveys, by means of labelled messages, signalling information relating to, for example, a multiplicity of circuits, or other information such as that used for network management. Common Channel Signalling can be regarded as a form of data communication that is specialised for various types of signalling and information transfer between processors in telecommunications networks. The signalling system uses signalling links for transfer of signalling messages between telephone exchanges or other nodes in the telecommunication network served by the system. Relevant SS7 standards are published, and regularly updated, as ITU-T Q.7xx Recommendations. SS7 signalling as been gradually enriched with new functions suitable for the incoming digital PLMNs, the Intelligent Networks, and the Packet Switch service. To support PLMNs a Mobile Application Part (MAP) has been developed by ETSI. MAP (TS 29.002) is the most important Level 4 Application Part, because regulates the mobility aspects of the users. Typical MAP functions are, e.g.: updating and clearance of VLR location information, storing of routing information in the HLR register, delivery & updating of user profiles in the HLR and VLR, IMEI (International Mobile Equipment Identity) check, Inter-MSC handover, etc.

The general protocol architecture of the signalling used in the network includes an Access Stratum with a superimposed Non-Access Stratum (NAS). The Access Stratum includes Interface protocols and Radio protocols for exchanging User data and control information between the CN and the UE. These protocols contain mechanisms for transfer NAS message transparently, i.e. the so-called Direct Transfer DT procedures. The NAS stratum includes higher levels protocols to handle control aspects, such as: Connection Management CM, Mobility Management MM, GPRS Mobility Management GMM, Session Management SM, Short Message Service SMS, etc. Said general protocol architecture is designed in horizontal layers and vertical planes, taken as logically independent of each other. At the various RAT interfaces, two main horizontal layers are present: an upper Radio Network Layer and a lower Transport Network Layer, in the latter is present the Physical Layer corresponding to the Level 1. Three vertical planes are generally present, respectively: a Control Plane, a User Plane, and a Transport Network Control Plane. The User Plane includes the Data Stream(s) and the data Bearer(s) for the Data Stream(s). Each data stream is characterised by one or more frame protocols specified for that interfaces. The User Plane is used to transport all user data, e.g.: speech data or packet data. The Control Plane includes several Application Protocols used for all control signalling which is procedure specific. The Control Plane also includes the Signalling Bearer(s) for transporting the Application Protocols messages. The Transport Network Control Plane is used for all control signalling within the Transport Network Layer; it does not contain any Radio Network Layer information. The Transport Network Control Plane acts as plane between the Control Plane and the User Plane, it enables the Application Protocols in the Control Plane to be total independent of the technology selected for data bearer in the User Plane. The Layer 1 functions are those to interface to the physical medium (e.g. : optical fibre, radio link, copper cable) to offer the clock extraction capability and transmission quality control. The physical medium shall comply with some well known standards, i.e. SDH, SONET, Ex, Tx, etc. In the ATM (Asynchronous Transfer Mode) is used on Layer 2 of the UTRAN Transport Network Layer; to say, for all 3 Planes of the Iu (TS 25.412), Iur (TS 25.422) and Iub (TS 25.432) interfaces. The ATM mode enables the transmission of Real Time (RT) data, such as speech & video, as well as of Non-Real Time (NRT) data, such as packet data, computer files and graphics.

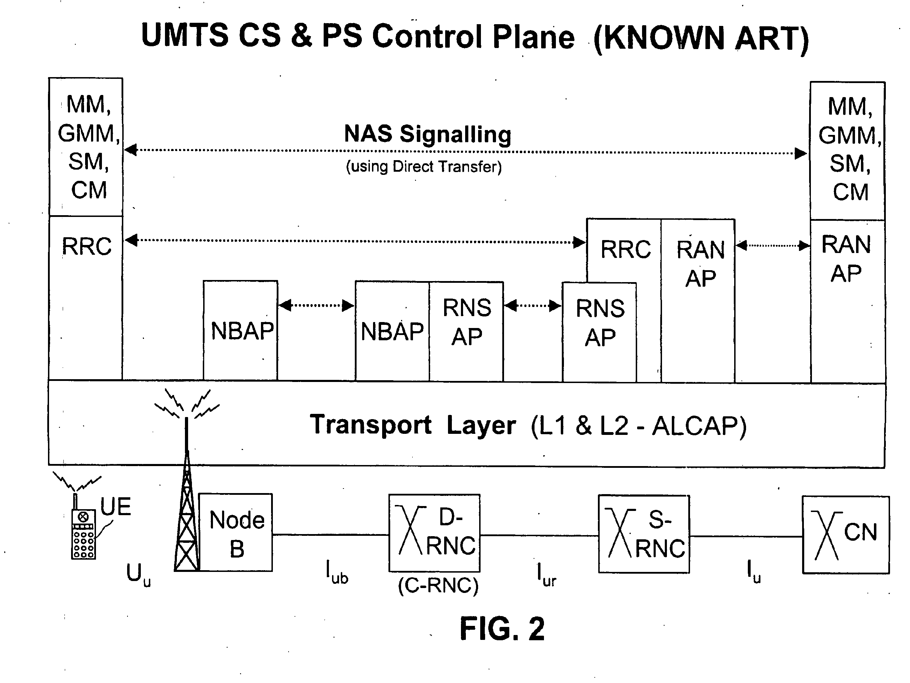

**Fig.2** shows the main protocol stacks of the CS and PS Control Plane referred, without limitation, to the only UMTS network of fig.1. A similar figure exists even for the GSM part. At the bottom of fig.2 the following elements: UE, Node B, D-RNC, S-RNC, CN and the respective interfaces Uu, Iub, Iur, Iu [Iu(CS), Iu(PS)] are depicted. The bottom part of the Control Plane includes the Transport Layer upon which the Radio Protocols and the protocols of the Non Access Stratum reside. The Transport Layer includes the elements of the Transport Network Layer, to say: the L1 and L2 layers and an Access Link Control Application Part (ALCAP). The NAS protocols are also indicated in fig.2. With reference to the **fig.2**, the Transport Plane on the Uu interface is the same as described in the User Plane, it consists of Level 1 UTRA FDD or TDD mode and Level 2 protocols MAC (Medium Access Control) and RLC (Radio Link Control). The Transport Plane on the Iub, Iur and Iu interfaces again consists of the same Level 1 as described in the User Plane. ATM and AAL1-3 are used as Layer 2 signalling protocols, in particular the ALCAP application part. The indicated Radio Protocols are the following: RRC (Radio Resource Protocol), NBAP (Node B Application Part), RNSAP (Radio Network Subsystem Application Part), RANAP (Radio Access Network Application Part). In operation, RRC is used as Layer 3 protocol for control information transfer between the UE and UTRAN. RRC message carry all information required to set-up, modify, or release Radio Links (RL), which carry in their payload higher layer NAS signalling and enable UE mobility in RRC Connected mode. NBAP is used as Layer 3 protocol on the Iub interface. It carries common signalling or dedicated signalling between C-RNC and Node Bs. RNSAP is used as Layer 3 protocol on the Iur interface. It supports basic inter-RNC mobility and DCH traffic, as well as CCH traffic transmission. RANAP is used as Layer 3 protocol on the Iu interface. It is used for signalling between UTRAN and the Core network CN. RANAP is responsible on Iu for e.g.: Paging, RAB (Radio Access Bearer) management, S-RNC relocation, security and overload control, and the NAS signalling transfer. The indicated NAS Protocols are the following: MM (Mobility Management), GMM (GPRS MM), SM (Session Management), and CM (Connection Management). MM supports function such as: UE attach / detach, security functions, and location/routing area updates. SM supports Packet Data Protocol (PDP) context activation / de-activation for PS connections. CM is used for Circuit Switched Call Control, Supplementary Services, and SMS support. Besides, RANAP and RRC contain Direct Transfer procedures for transparent NAS message transfer between UEs and the Core Network CN.

The main purpose of the network of **fig.1** is that to route speech signals and packet data among different points of a wide geographical network assuring in the meanwhile the possibly best Quality of Service (QoS) to the end user. GPRS QoS is specified in **GSM 02.60** and **GSM 03.60**. For the aim of QoS the provided services enter the following classes:
- precedence class,
- delay class,
- reliability class,
- peak throughput class, and
- mean throughput class.

The service precedence class indicates the relative importance of maintaining the service commitments under abnormal conditions, for example which packets are discarded in the event of problems such as limited resources or network congestion. The precedence classes are defined in High, Medium, and Low priority.

The delay class defines the maximum values for the mean delay and 95-percentile delay to be incurred by the transfer of data through the GPRS network(s). The delay parameter defines the end-to-end transfer delay incurred in the transmission of SDUs (Service Data Unit) through the GPRS network(s). This includes the radio channel access delay (on uplink) or radio channel scheduling delay (on downlink), the radio channel transit delay (uplink and/or downlink paths) and the GPRS-network transit delay (multiple hops). It does not include transfer delays in external networks. Four delay classes exist. As a minimum the PLMN shall support the best effort delay class 4.

The reliability class defines the probability of loss of, duplication of, mis-sequencing of, or corruption of SDUs.

The peak throughput is measured in units of octets per second. It specifies the maximum rate at which data is expected to be transferred across the network for an individual PDP context. There is no guarantee that this peak rate can be achieved or sustained for any time period, this depends upon the MS capability and available radio resources. The network may limit the subscriber to the negotiated peak data rate, even if additional transmission capacity is available. The peak throughput is independent of the delay class, which determines the per-packet GPRS network transit delay.

The mean throughput is measured in units of octets per hour. It specifies the average rate at which data is expected to be transferred across the GPRS network during the remaining lifetime of an activated PDP context. The network may limit the subscriber to the negotiated mean data rate (e.g., for flat-rate charging), even if additional transmission capacity is available. A "best effort" mean throughput class may be negotiated, and means that throughput shall be made available to the MS on a per need and availability basis.

UMTS QoS is specified in TS 23.107. For the aim of QoS the provided services enter the following classes:
- conversational class;
- streaming class;
- interactive class; and
- background class.

The main distinguishing factor between these QoS classes is how delay sensitive the traffic is: Conversational class is meant for traffic which is very delay sensitive while Background class is the most delay insensitive traffic class.

Conversational class mainly regards telephony speech (e.g. GSM). But with Internet and multimedia a number of new applications will require this scheme, for example voice over IP and video conferencing tools. The maximum transfer delay is given by the human perception of video and audio conversation. Therefore the limit for acceptable transfer delay is very strict, as failure to provide low enough transfer delay will result in unacceptable lack of quality. The transfer delay requirement is therefore both significantly lower and more stringent than the round trip delay of the interactive traffic case.

Streaming class is characterised by that the time relations (variation) between information entities (i.e. samples, packets) within a flow shall be preserved, although it does not have any requirements on low transfer delay. As the stream normally is time aligned at the receiving end (in the user equipment), the highest acceptable delay variation over the transmission media is given by the capability of the time alignment function of the application. Acceptable delay variation is thus much greater than the delay variation given by the limits of human perception.

Interactive class is applied when the end-user, that is either a machine or a human, is on line requesting data from remote equipment (e.g. a server). Examples of human interaction with the remote equipment are: web browsing, data base retrieval, server access. Examples of machines interaction with remote equipment are: polling for measurement records and automatic data base enquiries (telemachines). Interactive traffic is the other classical data communication scheme that on an overall level is characterised by the request response pattern of the end-user. At the message destination there is an entity expecting the message (response) within a certain time. Round trip delay time is therefore one of the key attributes. Another characteristic is that the content of the packets shall be transparently transferred (with low bit error rate).

Background class is applied when the end-user, which typically is a computer, sends and receives data-files in the background. Examples are background delivery of E-mails, SMS, databases download and reception of measurement records. Background traffic is one of the classical data communication schemes that on an overall level is characterised by that the destination is not expecting the data within a certain time. The scheme is thus more or less delivery time insensitive.

These classes can be grouped as groups of services, for example: RT traffic service including the UMTS Conversational and Streaming classes, and NRT traffic service including the UMTS Interactive and Background classes. Separated uplink and downlink values are considered for the services. Uplink is intended for transmissions from the UE to the Node B, or from the MS to the BTS. Downlink is intended the contrary direction of transmission.

WO 02/51176 A1 international patent application, discloses a data transmission method by means of that a predetermined transmission capacity in the form of a number of time slots (ZS) is reserved for the base station (BTS') in order to transmit data between units, e.g. between a base station (BTS') and a base station controller (BSC') in a radio communication system via transmission link (US). When a connection is being set up for voice or data transmission, one or more time slots (ZS) from the reserved transmission capacity are assigned to said connection by means of which the data is transmitted between the base station (BTS') and the base station controller (BSC'). The number of assigned time slots (ZS) depends on the service being transmitted via the connection. During the connection, the number of assigned time slots (ZS) can change dynamically if required. After the connection has been terminated, the assigned time slots (ZS) are freed and made available as part of the reserved transmission capacity.

The method is restricted to the only domain of a single base station controller BSC and the amount of reserved time slots is statically shared among the base stations.

### APPROACH TO THE TECHNICAL PROBLEM

Specially, in a multi-RAT network, each radio network controller shall have a precise view of the actual traffic load capabilities concerning the neighbouring cells belonging to adjacent domains of other controllers. In its turn each radio network controller shall inform the controllers of adjacent domains about the actual traffic load capabilities on its own domain. This helps issuing, or preventing, handover or cell reselection commands directed to the cells of neighbouring domains. Dedicated and shared resource settings are provided at specific interfaces for each RAT in order to support specific services. For GPRS, the current system supports GPRS dedicated resources on TRXs that are GPRS enabled. For GSM, said GPRS dedicated resources are a number of TSs (timeslots). Moreover, in GSM there exist voice calls dedicated resources: entire TRXs that are not GPRS enabled. In GSM, a number of TSs can be configured to be shared between voice calls and GPRS according to one of the following options:
- GPRS has priority on the TS,
- voice calls have priority on the TS,
- GPRS and voice calls have the same priority on the TS.

For the case an incoming voice call has priority on a TS and needs to use it while it is being used by GPRS, in current implementation the GPRS service is stopped and the voice call is started. Resources reservation is also possible for UMTS: codes, time slots and power can be allocated for certain services. For example, a certain number of codes can be assigned to circuit switched resources.

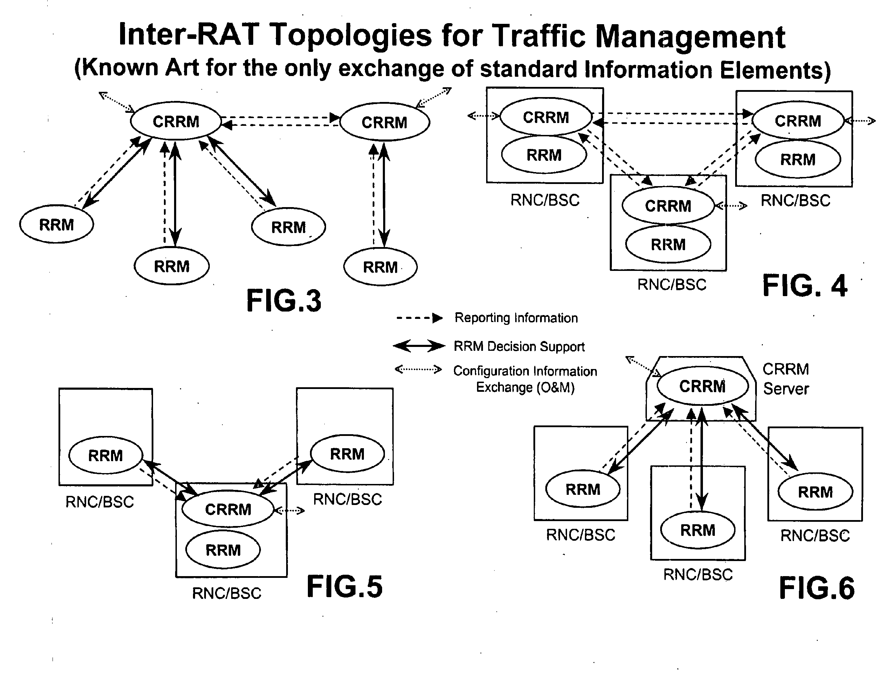

In the scope of a Common Radio Resource Management, current GSM and UMTS systems are allowed to exchange cell capacity and load information among RNCs/BSCs. Exchange of cell load information for traffic management is the subject of the following 3GPP **TR 25.891**, titled: "Improvement of RRM across RNS and RNS/BSS (Release 6)". In this document a functional model is proposed in which the whole set of radio resources for an operator is considered to be partitioned into "radio resource pools". Making reference to the **fig.3** these radio resource pools are controlled by two different types of functional entities:
- RRM entity: functional entity responsible for Radio Resource Management of one radio resource pool, i.e. this characterises the radio resource pool;
- CRRM entity: functional entity responsible for a Common Radio Resource Management, i.e. coordination of overlapping/neighbour radio resource pools controlled by different RRM entities. This new CRRM entity is introduced to allow some kind of coordination among different radio resource pools whose radio resources are linked to the same geographic area in the network.

Interfaces and functions are foreseen between a CRRM entity and one or more RRM entities and between two CRRM entities, but not between two RRM entities directly. Information on other systems (e.g. inter system measurements GSM/UTRAN) can be retrieved through either the Core Network interfaces or the Iur-g interface between RNC and BSC. The functional relationships between the entities of the functional model are based on two types of functions: Reporting Information and RRM Decision Support. Interactions of CRRM and RRM with O&M (Operation and Maintenance) for the exchange of configuration information are possible. With reference to the **Figures 4, 5,** and **6** the following CRRM topologies are provided:
1. CRRM integrated into every RNC/BSC **(fig.4);**
2. CRRM integrated only in some RNC/BSCs **(fig.5);**
3. CRRM as a stand-alone server **(fig.6).**

The approach illustrated in **fig.4** is characterised by the co-location of RRM and responsible CRRM entities. The functional interface between RRM and CRRM is not realised as an open interface in this solution. Only "Reporting Information" is exchanged over open interfaces. The depicted solution allows to transfer cell capacity and load information from one RNC to one BSC and vice versa using the information exchange / common measurement procedures via the Iur-g, or handover / relocation procedures via A / Iu interface. Within the UTRAN the information exchange / common measurement procedures on Iur can be used. Only "Reporting Information" function on the interface between different CRRM entities is standardised (mainly as a cell load exchange). The "Reporting Information" function between CRRM and RRM entities and the "RRM Decision Support" is vendor specific since the CRRM entity must be integrated in every RNC/BSC which has to support CRRM. The approach illustrated in **fig.5** is characterised by the co-location of CRRM with RRM for only one RNC/BSC. This integrated solution is allowing for open interfaces between RRM and CRRM (for the cases where RRM is not co-located with CRRM). The approach illustrated in **fig.6** implements RRM and CRRM entities into separate nodes. All of the interfaces among RRMs and CRRMs are open.

Thanks to the different topologies of the **Figures 3-6** an effective CRRM policy based approach is possible for load management. The introduction of an open interface between CRRM and both RNS and BSS allows the collection of traffic load information from the several RNCs/BSCs for the aim of taking optimal decisions concerning Handovers and, in an equivalent way for data, Cell Reselections. CRRM entity is not supposed to be consulted for channel switching or for soft handover, since the RRM in RNC/BSC shall handle these cases. The considered handovers are of the following type: between two RNCs; between two BSCs; between an RNC and a BSC, and vice versa, and more in general between two radio network controllers of different RATs. The basic idea behind the "Policy-based CRRM approach" is the standardisation of parameters and information exchange over an open interface between RRM and CRRM entities. This would enable the CRRM entity to provide CRRM policies to the RRM entities, thus allowing the traffic situation in the network to be dynamically adjusted on the basis of a common strategy. In this proposal the CRRM entity only acts as an advisor, so that the RRM entities still take the final decisions (RRM is the master), but based on parameters adjusted by CRRM. According to this policy, while the RRM entities take the fast decision required for each Access Request or Handover Request, the CRRM entity works at a slower time scale and provides policies to the RRM entities whenever an update is necessary. In this sense the frequency for a policy update depends on the traffic variations within the involved cells. The updating frequency can also be subject to configuration. The CRRM entity would be able to work on a faster time scale than O&M, in order to dynamically react to traffic load variations in overlapping radio resource pools. The "CRRM policy based approach" describes the functional relationship between CRRM and RRM by three functions:
1. CRRM triggers RRM to report measurement/load information or RRM reports initiated by the RRM entity itself.
2. CRRM can inform RRM about CRRM related information (e.g.: cell capacity and load situation of neighbour cells which are not under control of this RRM function.
3. CRRM sets load targets for the RRM functions for which the CRRM entity is responsible.
This can be obtained by the following four procedures:
- Measurement Initiating Procedure (CRRM initiated): CRRM triggers RRM to report a load measurement for a cell which is controlled by this RRM function. The report characteristics may be e.g. periodic, on demand, or event driven (e.g. by a load level).The possibility to report load measurements for more than 1 cell at one time should be allowed.
- Measurement Reporting Procedure (RRM initiated): Here the RRM may report load measurements per measurement object to the CRRM which is responsible for this RRM.
- Neighbour Cell CRRM Information Procedure (CRRM initiated): Based on the measurements received from different RRMs the CRRM derives the "Neighbour Cell CRRM Information" (distinguished per cell and per service) and sends it to all possibly affected RRM instances (neighbour cells in this sense are only those neighbour cells controlled by neighbour RRMs, since for cells of its own RRM no support is needed). This information is then used by the RRM in case of a handover (if cells of neighbour RRMs are involved) to prioritise the target cell.
- Load Target Setting Procedure (CRRM initiated): When a load target - which can dynamically be set by CRRM per cell - is exceeded, the serving RRM of the according cell takes autonomous RRM decisions based on the provided policy (Neighbour Cell CRRM Information, e.g. ranking of target cells). This concerns the following RRM decisions:
   - Handover due to load reasons.
   - Redirect due to load reasons.

The procedure advises RRM to aim at a certain load level within a cell, however the resulting actions must not increase blocking and dropping rates for calls in the corresponding cell.

Cell capacity and load situation parameters managed by said procedures constitute the same number of Information Elements (IE) included in respective fields of relevant messages foreseen in the specifications. The following information is reported:
- Information concerning GSM and UMTS cells (already available in RNSAP - **3GPP TS 25.423 v5.0.0 and 25.413 v5.0.0**):

- Cell Capacity Class Value: in order to compare the capacity available for user traffic within a cell among different operator' cells. Divided in two values (one for uplink, one for downlink): range: [1..100].
- Load Value: in order to define the total load in the cell, as a percentage of the capacity indicated by the Cell Capacity Class Value. Divided in two values (one for uplink, one for downlink): range: [0..100].
- RT Load Value: in order to define the load percentage due to RT services relative to the Load Value. Divided in two values (one for uplink, one for downlink): range: [0..100]. The NRT Load Value is not explicitly defined in the specification because directly obtainable by 100-RT Load.
- NRT Load Information [0..3]. The abovementioned NRT Load Value [0..100] was not felt as sufficient, because of the characteristics of NRT traffic, that can tolerate delays and non continuous transmission. It was therefore decided to also define a NRT Load Information where the different values have the following meaning (the following definition for the Uplink NRT Load Information has been taken directly from 25.423 v5.2.0 as an example, however the same kind of definition applies to the Downlink NRT Load Information):
   0: low: The Uplink NRT load is low.
   1: medium: The Uplink NRT load is medium.
   2: high: Uplink NRT load is high. Probability to admit a new user is low.
   3: overloaded: Uplink NRT overload. The probability to admit a new user is low, packets are discarded and the source is recommended to reduce the data flow.

The goal of the Cell Capacity Class Value would be to allow e.g. the RNC that receives this indication to figure out (by combining this information with the load values) whether there is still free capacity in the cell or not, in order to decide whether the cell can be considered as a potential target cell for handover or not.

### OUTLINED TECHNICAL PROBLEM

A centralised and dynamical reservation of capacity for specific services is desirable for the present and future networks. The need for dynamical settings will arise from the existence of different kinds of multi-mode terminals: depending on the actual user scenario (user terminals and their access capabilities) it will be preferable to have a certain network configuration in terms of capacities reserved in each cell for a specific service, for example, in order to allow NRT services in a certain cell to fulfil certain max delay requirements. Up to now in spite of the aforementioned CRRM policy, the used method for capacity reservation for a particular service is via O&M. For example, in GSM-GPRS it is possible to reserve capacity for CS and for PS. However, O&M configuration is generally vendor-specific, it is not a dynamical process and normally needs a human-machine interaction, therefore not suitable to follow the traffic changes within the network. Let's suppose of having recourse to a CRRM resource reservation policy, even in such a case there are not suggestions in the standardised Cell Capacity Class Value of how setting the reserved capacity for specific services. The insufficient Information Elements prevent the CRRM policy to follow the traffic changes within the network.

Summarising, a centralised and dynamical reservation of capacity for specific services is absent.

### SUMMARY AND ADVANTAGES OF THE INVENTION

The object of the present invention is that to overcome the drawbacks of the current policy for the resource reservation. and to indicate a method to provide a centralised and dynamical reservation of capacity for specific services able to follow the traffic changes within the network.

To achieve said objects the subject of the present invention is a centralised dynamical resource reservation method , as disclosed in claim 1.

In the disclosed method **service specific capacity settings** are new parameters set by a centralised CRRM entity for every RRM entity. The purpose of these settings is to ask the RRM to reserve a certain amount of resources for certain services. Moreover, the new service specific capacity settings parameters allow for a dynamical resource reservation to specific services with clear benefits on central traffic steering capabilities in a multi-RAT network accessed by a varying population of multi-mode terminals.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** (already described) shows a known diagram of a Multi-RAT (GSM + 3G) PLMN;
- **fig.2** (already described) shows the UMTS signalling Control Plane;
- **Figures 3, 4, 5,** and **6** (already described) show some topologies for traffic management.

### DETAILED DESCRIPTION OF AN EMBODIMENT OF THE INVENTION

With reference to the **Figures 3** to **6,** considering the TR 25.891 (chapter: Policy based CRRM) talks about a centralised CRRM entity involved in traffic management among overlapping resources of different RRM entities. We define **service specific capacity settings,** set by a centralised CRRM entity for every RRM entity. The purpose of these settings is to ask the RRM to reserve a certain amount of resources for certain services. Moreover, the new service specific capacity settings parameters allow for a dynamical resource reservation to specific services with clear benefits on central traffic steering capabilities in a multi-RAT network accessed by a varying population of multi-mode terminals.

Service specific capacity settings can be defined as "Reserved Capacity IEs" characterised as follows:
- The settings can refer to several services or group of services. Possible candidate services are the five GSM/GPRS QoS classes: precedence class, delay class, reliability class, peak throughput class, mean throughput class; and the four UMTS QoS traffic classes: conversational class, streaming class, interactive class, background class. These classes can be grouped as RT and NRT services, as already said. HSDPA (High Speed Downlink Packet Access) and MBMS (Multicast / Broadcast Multimedia Services) are other candidate services.
- Separated uplink and downlink values can be considered.
- Range is similar to the actual Cell Capacity Class Value (e.g. [0..100]).

In case there remains capacity that is not reserved neither for dedicated nor for shared purposes, this should be considered as shared by all the services with the same priority.

Given the above, another improvement is to allow certain resources to be shared by several services with different priorities. This can be done in several ways, e.g. by the combination of the following three IEs:
- Service Shared Resource ID: in order to allow different Service Shared Resource IDs for different resource shares of different size to be allocated in different ways with different priorities among certain services.
- Service Shared Resource Reserved Capacity: INTEGER [0..100] (this needs to be divided between Uplink and Downlink) (e.g. : 20).
- Service Shared Resource Priority List: list of services (services can be RT, NRT or the 4 different QoS service classes) (e.g.: vector: [conversational, interactive]).

In the shown example, 20% of cell capacity is given to conversational class with first priority and to interactive class services with second priority, i.e. in case conversational class services are not occupying that resource already.

The above idea allows managing the GSM case where the remaining capacity (which is reserved neither to RT nor to NRT) can be used by RT with priority on NRT.

A further improvement is to allow/not allow service pre-emption in case a service with higher priority would be initiated while a service with lower priority is ongoing: the question arises whether the service with higher priority should take possession over the resources immediately (with pre-emption) or after the service with lower priority has concluded (without pre-emption) or after the service with lower priority has stopped the transmission (again a case that can be seen as without pre-emption). The abovementioned 3 IEs could be set in an RRM entity by O&M or by CRRM.

In order to generalise, we define one single element for the capacity settings of both dedicated and shared resources, organising the proposed information in one Capacity Setting IE, which would include the following information:
- Capacity Setting ID IE:
   - Type: integer value.
   - Description: identifier of the Capacity Setting IE.
- Uplink Capacity Share IE:
   - Type: Range: [0..100].
   - Description: to indicate the amount of uplink resource (uplink capacity share) for this capacity setting.
- Downlink Capacity Share IE:
   - Type: Range: [0..100].
   - Description: to indicate the amount of downlink resource (downlink capacity share) for this capacity setting.
- Service IE (N):
   - Type: vector of N elements.
   - Description: Every element represents a service (or group of services: e.g. RT is the group of conversational and streaming services). At least one element must be indicated. Possible elements are: RT, NRT and the 4 different QoS service classes. In case N=1, the Capacity Setting IE is indicating capacity dedicated to one element. In case N>1, the Capacity Setting IE is indicating capacity shared among the listed elements.
- Priority Indicator IE (N):
   - Type: vector of N integer values.
   - Description: This IE can be used only if N>1. Priority Indicator IE (n) indicates the priority relative to the element identified by Service ID IE (n). Priority 1 is the highest priority. Priorities decrease from 1 to M
   where N>=M>1. When N>1 and Priority Indicator IE is not used, the same priority is assigned to all the elements in Service IE.
- Pre-emption Indicator IE (N):
   - Type: vector of N Boolean values.
   - Description: This IE can only be used when Priority Indicator IE is used. Pre-emption Indicator IE (n) indicates whether pre-emption should be applied to the element identified by Service ID IE (n) in case a service with higher priority is requiring the resource. In case Priority Indicator IE is used and Pre-emption Indicator IE is not used, no pre-emption should be applied.
Example: in the following, a complete example is given: Capacity Setting IE:
- Capacity Setting ID IE = 1;
- Uplink Capacity Share IE = 30;
- Downlink Capacity Share IE = 30;
- Service IE = [Conversational, Streaming, NRT];
- Priority Indicator IE = [1,2,3];
- Pre-emption Indicator IE = [N, N, Y] ;

In the above example, the capacity setting is indicated by an ID=1. The reserved capacity in uplink is 30% of the total cell capacity, and the same applies to the downlink. The reserved capacity can be shared among Conversational, Streaming and NRT services. The highest priority for occupying said resource is given to Conversational services, second highest priority is given to Streaming services and last priority is given to NRT traffic. Pre-emption is used only to NRT traffic in case NRT traffic is occupying the resource and a Conversational or Streaming service requests the resource.

In operation, the resource reservation method of the invention includes the following steps:
a) a centralised radio network controller (CRRM) receives from the satellite radio network controllers (e.g. RNC, BSC) information relevant the user traffic load referred to the various services or groups of services active in each controlled cell, and sets in reply Reserved Capacity Information Elements referred to those specific services or groups of services;
b) the centralised radio network controller (CRRM) includes the Reserved Capacity Information Elements into respective fields of one or more messages sent to the satellite radio network controllers, of the same or another radio access technology;
c) the radio network controllers receive said Information Elements and reserves capacity accordingly.

## Claims

1. Resource reservation method in a mobile communication network deploying one or more radio access technologies (GSM , UTRAN) that overlap over the same geographic area subdivided in control domains of satellite radio access network controllers (RNC, BSC), interfaced to a centralised radio access network controller (CRRM) for the aim of radio resource management, including the step of:
a) receiving, by the centralised radio network controller (CRRM), from said satellite radio access network controllers (RRM) information relevant to the user traffic load referred to the various services or groups of services active in each controlled cell;
**characterised in that** further includes the steps of:
b) setting, by the centralised radio access network controller (CRRM), Reserved Capacity Information Elements referred to those specific services or groups of services;
c) including, by the centralised radio network controller (CRRM), the Reserved Capacity Information Elements into respective fields of one or more messages sent to the satellite radio access network controllers (RRM), of the same or another radio access technology;
d) receiving, by the satellite radio access network controllers (RRM), said Information Elements and providing reserved capacity accordingly in the controlled cells.

2. The method of claim 1, **characterized in that** said Reserved Capacity Information Elements are arranged into one Capacity Setting Information Element unique for the capacity settings of both dedicated and shared resources.

3. The method of claim 2, **characterized in that** said Capacity Setting Information Element includes in its turn the following Information Elements, called IE, detailed as Type and Description:
- Capacity Setting ID IE:
- Type: integer value;
- Description: identifier of the Capacity Setting IE;
- Uplink Capacity Share IE:
- Type: Range: [0..100];
- Description: to indicate the amount of uplink shared resource for this capacity setting;
- Downlink Capacity Share IE:
- Type: Range: [0..100];
- Description: to indicate the amount of downlink shared resource for this capacity setting;
- Service IE (N) :
- Type: vector of N elements;
- Description: Every element represents a service or group of services;
- Priority Indicator IE(N):
- Type: vector of N integer values;
- Description: indicates the priority relative to the element identified by Service ID IE(n);
- Pre-emption Indicator IE(N):
- Type: vector of N Boolean values;
- Description: indicates whether pre-emption should be applied to the element identified by Service ID IE(n) in case a service with higher priority is requiring the resource.

4. The method of claim 3, **characterized in that** at least one element must be indicated for Service IE(N); possible elements are: Real Time traffic service, Non-Real Time traffic service, and the four different QoS service classes: conversational class, streaming class, interactive class, and background class.

5. The method of claim 4, **characterized in that** in case N=1, the Capacity Setting IE is indicating capacity dedicated to one element; in case N>1, the Capacity Setting IE is indicating capacity shared among the listed elements.

6. The method of claim 3, **characterized in that** the priority Indicator IE(N) is used only if N>1; priority 1 is the highest priority; priorities decrease from 1 to M where N>=M>1.

7. The method of claim 6, **characterized in that** when N>1 and Priority Indicator IE is not used, the same priority is assigned to all the elements in the Service IE.

8. The method of claim 3, **characterized in that** Pre-emption Indicator IE is only usable when Priority Indicator IE is used; in case Priority Indicator IE is used and Pre-emption Indicator IE is not used, no pre-emption is applied.

## Patentansprüche

1. Ressourcenreservierungsverfahren in einem Mobilkommunikations-Netzwerk, in dem eine oder mehrere Funkzugangstechnologien (GSM, UTRAN) zum Einsatz kommen, die sich in demselben geografischen Bereich überlappen, welcher unterteilt ist in Steuerungsdomänen von Satelliten-Funkzugangsnetzwerk-Steuerungseinheiten (RNC, BSC), die zwecks Verwaltung der Funkressourcen mit einer zentralisierten Funkzugangsnetzwerk-Steuerungseinheit (CRRM) verbunden sind, wobei das Verfahren folgenden Schritt beinhaltet:
a) Empfangen von Informationen zur Benutzerverkehrslast mit Bezug auf die verschiedenen Dienste oder Gruppen von Diensten, die in jeder gesteuerten Zelle aktiv sind, von den genannten Satelliten-Funkzugangsnetzwerk-Steuerungseinheiten (RRM) durch die zentralisierte Funknetzwerk-Steuerungseinheit (CRRM);
**dadurch gekennzeichnet, dass** es zudem die folgenden Schritte beinhaltet:
b) Einstellen von Informationselementen für reservierte Kapazität mit Bezug auf diese spezifischen Dienste oder Gruppen von Diensten durch die zentralisierte Funkzugangsnetzwerk-Steuerungseinheit (CRRM);
c) Aufnehmen der Informationselemente für reservierte Kapazität in entsprechende Felder einer oder mehrerer Nachricht(en), die an die Satelliten-Funkzugangsnetzwerk-Steuerungseinheiten (RRM) mit der gleichen oder einer anderen Funkzugangstechnologie geschickt werden, durch die zentralisierte Funkzugangsnetzwerk-Steuerungseinheit (CRRM) ;
d) Empfangen der besagten Informationselemente und entsprechendes Bereitstellen reservierter Kapazität in den gesteuerten Zellen durch die Satelliten-Funkzugangsnetzwerk-Steuerungseinheiten (RRM).

2. Verfahren nach Anspruch 1, **dadurch gekennzeichnet, dass** die besagten Informationselemente für reservierte Kapazität in einem Kapazitätseinstellungs-Informationselement angeordnet sind, welches für die Kapazitätseinstellungen sowohl speziell zugewiesener als auch gemeinsam genutzter Ressourcen eindeutig ist.

3. Verfahren nach Anspruch 2, **dadurch gekennzeichnet, dass** das besagte Kapazitätseinstellungs-Informationselement seinerseits folgende Informationselemente, IE genannt, beinhaltet, welche nach Typ und Beschreibung genauer bezeichnet werden:
- IE für Kennung der Kapazitätseinstellung:
- Typ: ganzzahliger Wert;
- Beschreibung: IE mit Kennung der Kapazitätseinstellung;
- IE für Kapazitätsanteil der Aufwärtsstrecke:
- Typ: Bereich: [0..100] ;
- Beschreibung: zur Anzeige der Menge an gemeinsam genutzten Ressourcen in der Aufwärtsstrecke für diese Kapazitätseinstellung;
- IE für Kapazitätsanteil der Abwärtsstrecke:
- Typ: Bereich: [0..100];
- Beschreibung: zur Anzeige der Menge an gemeinsam genutzten Ressourcen in der Abwärtsstrecke für diese Kapazitätseinstellung;
- Dienst-IE (N):
- Typ: Vektor mit N Elementen;
- Beschreibung: Jedes Element repräsentiert einen Dienst oder eine Gruppe von Diensten;
- Prioritätsindikator-IE (N):
- Typ: Vektor mit N ganzzahligen Werten;
- Beschreibung: zeigt die Priorität im Verhältnis zu dem Element an, das durch die Kennung des Dienst-IE(n) identifiziert wird;
- Bevorrechtigungsindikator-IE (N) :
- Typ: Vektor mit N Boole'schen Werten;
- Beschreibung: zeigt an, ob Bevorrechtigung auf das durch die Kennung des Dienst-IE(n) identifizierte Element angewendet werden sollte, falls ein Dienst mit höherer Priorität die Ressource anfordert.

4. Verfahren nach Anspruch 3, **dadurch gekennzeichnet, dass** wenigstens ein Element für das Dienst-IE(N) angezeigt werden muss; mögliche Elemente sind: Echtzeit-Verkehrsdienst, Nichtechtzeit-Verkehrsdienst und die vier verschiedenen Dienstgüte (QoS)-Dienstklassen: Konversationsklasse, Streamingklasse, Interaktivklasse und Hintergrundübertragungsklasse.

5. Verfahren nach Anspruch 4, **dadurch gekennzeichnet, dass** im Falle von N=1 das Kapazitätseinstellungs-IE Kapazität anzeigt, welche speziell einem Element zugewiesen ist; im Falle von N>1 das Kapazitätseinstellungs-IE Kapazität anzeigt, welche von den aufgelisteten Elementen gemeinsam genutzt wird.

6. Verfahren nach Anspruch 3, **dadurch gekennzeichnet, dass** das Prioritätsindikator-IE (N) nur genutzt wird, falls N>1; Priorität 1 die höchste Priorität ist; Prioritäten von 1 bis M abnehmen, wobei N>=M>1 ist.

7. Verfahren nach Anspruch 6, **dadurch gekennzeichnet, dass**, wenn N>1 ist und das Prioritätsindikator-IE nicht genutzt wird, allen Elementen im Dienst-IE dieselbe Priorität zugewiesen wird.

8. Verfahren nach Anspruch 3, **dadurch gekennzeichnet, dass** das Bevorrechtigungsindikator-IE nur nutzbar ist, wenn das Prioritätsindikator-IE genutzt wird; falls das Prioritätsindikator-IE genutzt wird und das Bevorrechtigungsindikator-IE nicht genutzt wird, wird keine Bevorrechtigung angewendet.

## Revendications

1. Procédé de réservation de ressources dans un réseau de communication mobile déployant une ou plusieurs technologies d'accès radio (GMS, UTRAN) qui se chevauchent sur la même zone géographique subdivisée en domaines de contrôle de contrôleurs de réseau à accès radio par satellite (RNC, BSC), en interface avec un contrôleur de réseau à accès radio centralisé (CRRM) dans le but de la gestion des ressources radio, incluant l'étape de :
a) recevoir, par le contrôleur de réseau à accès radio centralisé (CRRM), desdits contrôleurs de réseau à accès radio par satellite (RRM) les informations relatives à la charge de trafic utilisateur concernant les divers services ou groupes de services actifs dans chaque cellule contrôlée ;
**caractérisé en ce qu'**il inclut en outre les étapes de :
b) définir, par le contrôleur de réseau à accès radio centralisé (CRRM), des Éléments d'Information de Capacité Réservée concernant ces services ou groupes de services spécifiques ;
c) inclure, par le contrôleur de réseau à accès radio centralisé (CRRM), les Éléments d'Information de Capacité Réservée dans les champs respectifs d'un ou plusieurs messages envoyés aux contrôleurs de réseau à accès radio par satellite (RRM), de la même ou d'une autre technologie d'accès radio ;
d) recevoir, par les contrôleurs de réseau à accès radio par satellite (RRM), lesdits Éléments d'Information et prévoir de manière appropriée une capacité réservée dans les cellules contrôlées.

2. Procédé selon la revendication 1, **caractérisé en ce que** lesdits Éléments d'Information de Capacité Réservée sont agencés en un Élément d'Information de Définition de Capacité unique pour les définitions de capacité tant des ressources dédiées que des ressources partagées.

3. Procédé selon la revendication 2, **caractérisé en ce que** ledit Élément d'Information de Définition de Capacité inclut lui-même les Éléments d'Information suivants, appelés IE, détaillés quant à leur type et leur description :
- IE d'Identifiant de Définition de Capacité :
- Type : valeur entière ;
- Description : identifiant de l'IE de Définition de Capacité ;
- IE de Part de Capacité en Liaison Montante :
- Type : Plage : [0..100] ;
- Description : pour indiquer la quantité de ressource partagée sur la liaison montante pour cette définition de capacité ;
- IE de Part de Capacité en Liaison Descendante :
- Type : Plage : [0..100] ;
- Description : pour indiquer la quantité de ressource partagée sur la liaison descendante pour cette définition de capacité ;
- IE de Service (N) :
- Type : vecteur de N éléments ;
- Description : Chaque élément représente un service ou groupe de services ;
- IE d'Indicateur de Priorité (N) :
- Type : vecteur de N valeurs entières ;
- Description : indique la priorité par rapport à l'élément identifié par l'IE d'Identifiant de Service (n) ;
- IE d'Indicateur de Préemption (N) :
- Type : vecteur de N valeurs booléennes ;
- Description : indique si une préemption doit être appliquée à l'élément identifié par l'IE d'Identifiant de Service (n) dans le cas où un service avec une priorité supérieure demande la ressource.

4. Procédé selon la revendication 3, **caractérisé en ce qu'**au moins un élément doit être indiqué pour l'IE de Service (N) ; des éléments possibles étant : service de trafic en Temps Réel, service de trafic Non en Temps Réel, et les quatre classes différentes de services QoS : classe de conversation, classe de lecture en transit, classe interactive, et classe de fond.

5. Procédé selon la revendication 4, **caractérisé en ce que** dans le cas où N=1, l'IE de Définition de Capacité indique la capacité dédiée à un élément ; dans le cas où N>1, l'IE de Définition de Capacité indique la capacité partagée entre les éléments listés.

6. Procédé selon la revendication 3, **caractérisé en ce que** l'IE d'Indicateur de Priorité (N) n'est utilisé que si N>1 ; la priorité 1 est la priorité la plus élevée; les priorités diminuent de 1 à M où N≥M>1.

7. Procédé selon la revendication 6, **caractérisé en ce que** lorsque N>1 et que l'IE d'Indicateur de Priorité n'est pas utilisé, la même priorité est attribuée à tous les éléments dans l'IE de Service.

8. Procédé selon la revendication 3, **caractérisé en ce que** l' IE d'Indicateur de Préemption ne peut être utilisé que lorsque l'IE d'Indicateur de Priorité est utilisé ; dans le cas où l'IE d'Indicateur de Priorité est utilisé et l'IE d'Indicateur de Préemption n'est pas utilisé, aucune préemption n'est appliquée.
